# EUROPÄISCHE PATENTSCHRIFT

(11) **EP 3 177 833 B1**
(45) Veröffentlichungstag und Bekanntmachung des Hinweises auf die Patenterteilung: **15.08.2018**
(21) Anmeldenummer: 15735640.3
(22) Anmeldetag: 18.06.2015
(51) Int. Cl.: F04B 51/00

(54) **VORRICHTUNG UND SYSTEM ZUR DRUCKBEAUFSCHLAGUNG EINES FLUIDS UND ENTSPRECHENDE VERWENDUNG**
DEVICE AND SYSTEM FOR APPLYING PRESSURE TO A FLUID AND CORRESPONDING USE
DISPOSITIF ET SYSTÈME DE MISE SOUS PRESSION D'UN FLUIDE ET UTILISATION CORRESPONDANTE

(30) Priorität: 07.08.2014 DE 102014215646
(43) Veröffentlichungstag der Anmeldung: 14.06.2017
(73) Patentinhaber: Robert Bosch GmbH, 70442 Stuttgart (DE)
(72) Erfinder: BAREUTHER, Thilo, 73207 Plochingen (DE); GOESER, Joachim, 73072 Donzdorf (DE); MAIER, Martin, 73269 Hochdorf (DE); KUTTERUF, Karl-Martin, 73272 Neidlingen (DE); VOGEL, Markus, 73095 Albershausen (DE); HOSS, Reinhard, 73207 Plochingen (DE); DOERHOEFER, Dirk, 73277 Owen (DE)
(86) Internationale Anmeldenummer: PCT/EP2015/063686
(87) Internationale Veröffentlichungsnummer: WO 2016/020094

(56) Entgegenhaltungen:
- DE-A1- 2 842 128
- DE-A1- 19 613 042
- DE-A1-102011 118 282

## Beschreibung

Die vorliegende Erfindung betrifft eine Vorrichtung zur Druckbeaufschlagung eines Fluids, insbesondere zur automatischen Druckbeaufschlagung eines Fluids mit einem ersten vorgebbaren Druckwert zur Ausgabe an einem Ausgangs-Anschluss und mit einem zweiten vorgebbaren Druckwert zur Ausgabe an einem Kühlvorrichtungs-Anschluss. Insbesondere sind ein Regeln des Drucks des Fluids an dem Ausgangs-Anschluss auf den ersten vorgebbaren Druckwert und ein Regeln des Drucks des Fluids an dem Kühlvorrichtungs-Anschluss auf den zweiten vorgebbaren Druck gleichzeitig möglich. Weiterhin betrifft die Erfindung ein System zum automatischen Beaufschlagen eines Fluids mit einem ersten vorgebbaren Druckwert zur Ausgabe an einem Ausgangs-Anschluss.

Bei dem Fluid handelt es sich vorzugsweise um eine Flüssigkeit, insbesondere ein Öl. Das Fluid kann auch ein Gas sein oder Aggregatszustandsumwandlungen insbesondere zwischen einer Flüssigkeit und einem Gas unterworfen sein.

### Stand der Technik

Das Bereitstellen eines Fluids mit einem vorgegebenen Druckwert, insbesondere einem vorgegebenen zeitlichen Druckverlauf, ist eine häufige Aufgabenstellung. Insbesondere erfordert häufig eine Prüfung eines Prüflings, etwa einer Hochdruckpumpe, mehrere Wechsel des Zulaufdrucks der Ölversorgung während des Prüfungsablaufs an einem Pumpenprüfstand. Der Zulaufdruck ist dabei jener vorgebbare und vorgegebene Druckwert des Fluids, das heißt numerischer Druckwert, welchen der Druck des Fluids aufweist, welcher zur Prüfung der Hochdruckpumpe bereitgestellt wird. Üblicherweise erfolgt eine Einstellung des Zulaufdrucks manuell. Manuelle Druckregelungen im Zulauf werden meist über ein von Hand zu betätigendes Druckbegrenzungsventil im Tankrücklauf eingestellt. Ein Verschluss mit vorgespannter Feder bestimmt den Zulaufdruck. Dieser unterliegt allerdings Schwankungen bei sich verändernden Volumenströmen, der dadurch bedingten Änderung der Federvorspannung und den geänderten Öffnungen bzw. der geänderten Drosselung. Eine Kühlung des für die Prüfung verwendeten Öls erfolgt zudem herkömmlicherweise über einen gesonderten Kühlkreislauf mit einer separaten Versorgungspumpe.

In der DE 10 2011118 282 A1 ist ein hydraulischer Pumpenprüfstand mit einer geregelten Rückspeiseeinheit beschrieben.

### Offenbarung der Erfindung

Die vorliegende Erfindung offenbart eine Vorrichtung mit den Merkmalen des Patentanspruchs 1 und ein System mit den Merkmalen des Patentanspruchs 8.

Demgemäß ist eine Vorrichtung zur Druckbeaufschlagung eines Fluids vorgesehen, wobei das Fluid, mit einem ersten vorgebbaren Druckwert zur Ausgabe an einem Ausgangs-Anschluss und, insbesondere gleichzeitig, mit einem zweiten vorgebbaren Druckwert zur Ausgabe an einem Kühlvorrichtungs-Anschluss beaufschlagbar ist. Die Vorrichtung umfasst: einen Einleitungs-Anschluss zum Einleiten des Fluids in die Vorrichtung; den Kühlvorrichtungs-Anschluss und den Ausgangs-Anschluss; einen ersten Leitungsknoten, welcher einen ersten Ausgang und einen zweiten Ausgang aufweist, wobei das an dem Einleitungs-Anschluss eingeleitete Fluid mittels des ersten Ausgangs an eine steuerbare erste Ventileinrichtung mit einem einstellbaren ersten Öffnungsdruckwert leitbar ist; und mittels des zweiten Ausgangs an eine zweite Ventileinrichtung mit einem zweiten Öffnungsdruckwert leitbar ist; wobei über die steuerbare ersten Ventileinrichtung das Fluid zu dem Kühlvorrichtungs-Anschluss leitbar ist; wobei über die zweite Ventileinrichtung das Fluid zu einem zweiten Leitungsknoten mit einem dritten Ausgang und einem vierten Ausgang leitbar ist; wobei das zu dem zweiten Leitungsknoten geleitete Fluid mittels des dritten Ausgangs des zweiten Leitungsknotens zu einer steuerbaren dritten Ventileinrichtung mit einem einstellbaren dritten Öffnungsdruckwert leitbar ist; und wobei das zu dem zweiten Leitungsknoten geleitete Fluid mittels des vierten Ausgangs des zweiten Leitungsknotens zu dem Ausgangs-Anschluss leitbar ist; und wobei die erste Ventileinrichtung und die dritte Ventileinrichtung automatisch zum gleichzeitigen Beaufschlagen des Fluids mit dem ersten vorgebbaren Druckwert zur Ausgabe an dem Ausgangs-Anschluss und mit dem zweiten vorgebbaren Druckwert zur Ausgabe an dem Kühlvorrichtungs-Anschluss steuerbar sind. Die Vorrichtung umfasst somit insbesondere den ersten und den zweiten Leitungsknoten sowie die erste bis dritte Ventileinrichtung.

Weiterhin ist ein System zur, insbesondere automatischen, Druckbeaufschlagung eines Fluids mit einem ersten vorgebbaren Druckwert zur Ausgabe an einem Ausgangs-Anschluss vorgesehen, mit: einer erfindungsgemäßen Vorrichtung; einer steuerbaren ersten Pumpvorrichtung, welche zum Einleiten des Fluids an den Einleitungs-Anschluss der Vorrichtung angeschlossen ist; einem Fluidtank zum Aufbewahren des Fluids, welcher zum Aufnehmen an den Fluidtank rückzuführenden Fluids von der Vorrichtung an die Vorrichtung angeschlossen ist; und einer an dem Kühlvorrichtungs-Anschluss der Vorrichtung angeschlossenen Kühlvorrichtung, in welcher das Fluid als Kühlmittel fungiert und mittels welcher das Fluid an den Fluidtank rückführbar ist.

Weiterhin ist eine Verwendung des erfindungsgemäßen Systems oder der erfindungsgemäßen Vorrichtung zum Prüfen einer Einspritzpumpe vorgesehen.

Eine der vorliegenden Erfindung zugrunde liegende Erkenntnis besteht darin, dass vorteilhaft eine einzige Versorgungspumpe sowohl für einen Kühlkreislauf zum Kühlen eines Prüflings und/oder einer Einspritzmenge als auch für einen Versorgungskreislauf zum Bereitstellen, das heißt Beaufschlagen, des Fluids mit einem vorgebbaren Druckwert, verwendet werden kann. Unter einem Versorgungskreislauf soll insbesondere ein Kreislauf des Fluids zwischen der Versorgungspumpe, einem Prüfling und einem Fluidtank verstanden werden. Unter einem Kühlkreislauf soll insbesondere ein Kreislauf des Fluids zwischen der Versorgungspumpe, einer Kühlvorrichtung und dem Fluidtank verstanden werden.

Mittels der erfindungsgemäßen Vorrichtung und/oder dem erfindungsgemäßen System ist eine automatische Druckregelung an dem Ausgangs-Anschluss, insbesondere eine Zulaufdruckregelung und damit ein automatischer Prüfungsablauf für einen an dem Ausgangs-Anschluss angeschlossenen Prüfling, möglich. Weiterhin kann gleichzeitig das Vorhandensein einer konstanten oder nahezu konstanten Menge des Fluids, mit dem vorgebbaren und vorgegebenen zweiten Druckwert, in dem Kühlkreislauf gewährleistet werden, wodurch eine stets ausreichende Kühlung, beispielsweise einer Einspritzmenge in den Prüfling, mittels des Fluids als Kühlmittel ermöglicht ist. Die Einspritzmenge kann, vollständig oder zum Teil, aus dem an den Ausgangs-Anschluss geleiteten, weiter prozessierten, insbesondere erwärmten, Fluid bestehen. Der erste und/oder der zweite Druckwert können während eines Betriebs der Vorrichtung oder des Systems anpassbar sein, etwa zum Regeln einer gewünschten Regelgröße. In einem Kühlregelungs-Modus kann etwa auf einen konstanten Volumenstrom des Fluids in dem Kühlkreislauf geregelt werden, sodass Messvorgänge störende Schwankungen im Volumenstrom minimiert werden.

Über den Ausgangs-Anschluss ist die erfindungsgemäße Vorrichtung an ein etwaiges Druckregelventil, insbesondere ein manuelles Druckregelventil, etwa eines bestehenden Prüfstands, anschließbar. Somit kann die erfindungsgemäße Vorrichtung einfach zum Nachrüsten und damit Aufwerten bestehender Einrichtungen, insbesondere Prüfstände, eingesetzt werden. Ein besonderer Vorteil ist die Kombination aus der weiterhin bestehenden individuellen manuellen Einstellbarkeit des manuellen Druckregelventils unter Gewährleistung einer automatischen geregelten Kühlleistung mit dem zweiten Druckwert in jedem Betriebspunkt und der automatischen Druckregelung an dem Ausgangs-Anschluss auf den ersten Druckwert.

Das an den Ausgangs-Anschluss anschließbare federbelastete manuelle Druckregelventil kann die Funktion eines Sicherheitsventils, das heißt eines Druckbegrenzungsventils, übernehmen.

Unter einem Öffnungsdruckwert eines Ventils, eines Rückschlagventils oder allgemein einer Ventileinrichtung soll insbesondere ein Druckwert verstanden werden, welchen ein aktueller Druckwert des Fluids übersteigen muss, um das Ventil, das Rückschlagventil oder die Ventileinrichtung, welche den besagten Öffnungsdruckwert aufweist, zu öffnen, offen zu halten und somit zu durchqueren. Unter einem Angeschlossensein eines ersten Elements an einem zweiten Element soll insbesondere verstanden werden, dass das Fluid, direkt oder über Leitungsabschnitte, von dem ersten Element an das zweite Element und/oder umgekehrt leitbar ist.

Unter einem Anschluss, worunter insbesondere der Ausgangs-Anschluss und der Kühlvorrichtungs-Anschluss fallen, soll insbesondere eine Einrichtung verstanden sein, über welche die Vorrichtung an externe Elemente oder Leitungsabschnitte anschließbar ist. Unter einem Leitungsabschnitt sollen ein oder mehrere Elemente, beispielsweise Röhren, verstanden werden, welche zum - idealerweise verlustlosen - Leiten des Fluids ausgebildet sind. Darunter, dass das Fluid an ein bestimmtes Element leitbar sein soll, soll insbesondere verstanden werden, dass in zumindest einem Verwendungsmodus der Vorrichtung oder des Systems das Fluid bei bestimmungsgemäßem Gebrauch an das bestimmte Element geleitet wird.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung der erfindungsgemäßen Vorrichtung ist die erste Ventileinrichtung und/oder die dritte Ventileinrichtung als mindestens ein elektronisch oder pneumatisch steuerbares Proportionalventil ausgebildet. Hierdurch ist die Vorrichtung mit besonders geringem technischen Aufwand herstellbar und steuerbar. Das Steuern der ersten und/oder dritten Ventileinrichtung kann mittels einer Steuereinrichtung der Vorrichtung, aber auch alternativ oder zusätzlich mit einer externen Steuervorrichtung, welche ein Teil des erfindungsgemäßen Systems sein kann, erfolgen.

Gemäß einer weiteren bevorzugten Weiterbildung ist die zweite Ventileinrichtung als Rückschlagventil ausgebildet. Durch den Einbau von Rückschlagventilen ist eine Begrenzung, das heißt eine Verminderung, der Größe, insbesondere in Bezug auf den Kv-Wert von Proportionalventilen der Vorrichtung möglich. Dadurch kann ein Einsatzbereich von Proportionalventilen erweitert und/oder ein größerer Durchfluss durch die Proportionalventile ermöglicht sein. Der Kv-Wert wird auch als Durchflussfaktor oder Durchflusskoeffizient bezeichnet und ist ein Maß für einen erzielbaren Durchsatz des Fluids durch eine Ventileinrichtung und dient zur Auswahl und Dimensionierung von Ventileinrichtungen. Der Kv-Wert ist als effektiver Querschnitt interpretierbar.

Gemäß einer weiteren bevorzugten Weiterbildung ist das an die steuerbare dritte Ventileinrichtung geleitete Fluid an einen ersten Rückführungsanschluss leitbar, welcher zum Anschließen eines Fluidtanks zum Rückführen des an die steuerbare dritte Ventileinrichtung geleiteten Fluids in den Fluidtank ausgebildet ist. Hierdurch kann die dritte Ventileinrichtung für eine Ableitung von Leckage sowie für eine Ableitung eines etwaigen Zuflusses über den Ausgangs-Anschluss in die erfindungsgemäße Vorrichtung ausgebildet sein. Das Rückführen kann dabei über eine Bohrung und einen Tankrücklauf an den Fluidtank erfolgen.

Gemäß einer weiteren bevorzugten Weiterbildung weist die Vorrichtung einen dritten Leitungsknoten mit einem fünften Ausgang und mit einem sechsten Ausgang auf. Das über die steuerbare erste Ventileinrichtung geleitete Fluid ist an den dritten Leitungsknoten leitbar, wobei das zu dem dritten Leitungsknoten geleitete Fluid mittels des fünften Ausgangs an eine vierte Ventileinrichtung mit einem vierten Öffnungsdruckwert leitbar ist, über welche das Fluid an einen zweiten Rückführungsanschluss leitbar ist, welcher zum Anschließen eines Fluidtanks zum Rückführen des an die vierte Ventileinrichtung geleiteten Fluids in den Fluidtank ausgebildet ist. Das an den vierten Leitungsknoten geleitete Fluid ist mittels des sechsten Ausgangs an den Kühlvorrichtungs-Anschluss leitbar. Durch die vierte Ventileinrichtung das Fluid an dem Kühlvorrichtungs-Anschluss mit dem vorgebbaren und vorgegebenen zweiten Druckwert beaufschlagbar, wobei auf den zweiten Druckwert geregelt werden kann, was einen konstanten oder nahezu konstanten Volumenstrom durch eine an dem Kühlvorrichtungs-Anschluss angeschlossene Kühlvorrichtung zur Folge hat.

Gemäß einer weiteren bevorzugten Weiterbildung weist die Vorrichtung einen ersten Drucksensor auf, welcher zum Messen eines ersten aktuellen Druckwerts des Fluids zwischen dem Einleitungs-Anschluss und dem ersten Leitungsknoten ausgebildet ist. Mittels eines zweiten Drucksensors ist ein zweiter aktueller Druckwert an dem Kühlvorrichtungs-Anschluss messbar, wodurch ist. Gemäß einer weiteren bevorzugten Weiterbildung weist die Vorrichtung einen zweiten Drucksensor auf, welcher zum Messen eines zweiten aktuellen Druckwerts des Fluids zwischen dem dritten Leitungsknoten und dem Kühlvorrichtungs-Anschluss ausgebildet ist. Hierdurch ist vorteilhafterweise ein Mindestdruckwert, welcher vorzugsweise kleiner oder gleich dem vorgegebenen zweiten Druckwert ist, an dem Kühlvorrichtungs-Anschluss überwachbar.

Basierend auf dem gemessenen ersten aktuellen Druckwert und/oder dem gemessenen zweiten aktuellen Druckwert können insbesondere die erste, zweite und/oder dritte Ventileinrichtung, aber auch andere Ventileinrichtungen der Vorrichtung, beispielsweise mittels der Steuereinrichtung des erfindungsgemäßen Systems, in Echtzeit angepasst werden, so dass das Fluid an dem Ausgangs-Anschluss und dem Kühlvorrichtungs-Anschluss mit dem ersten vorgebbaren Druckwert bzw. dem zweiten vorgebbaren Druckwert beaufschlagt ist.

Gemäß einer bevorzugten Weiterbildung weist das erfindungsgemäße System eine fünfte Ventileinrichtung mit einem manuell einstellbaren fünften Öffnungsdruckwert auf, welche an den Ausgangs-Anschluss der Vorrichtung angeschlossen ist und über welche das mit dem vorgegebenen ersten Druck beaufschlagte Fluid zum Prüfen eines Prüflings an den Prüfling leitbar ist. Ist beispielsweise die dritte Ventileinrichtung geschlossen, kann der vorgegebene erste Druckwert an dem Ausgangs-Anschluss durch manuelles Einstellen der fünften Ventileinrichtung bereitgestellt werden, wobei durch ein Regeln insbesondere der ersten Ventileinrichtung, beispielsweise mittels einer Steuereinrichtung, der vorgebbare und vorgegebene zweite Druckwert an dem Kühlvorrichtungs-Anschluss aufrechterhalten werden kann, was einen konstanten oder nahezu konstanten Volumenstrom des Fluids durch den Kühlvorrichtungs-Anschluss bewirkt.

Gemäß einer weiteren bevorzugten Weiterbildung umfasst das erfindungsgemäße System eine zweite Pumpvorrichtung, mittels welcher das Fluid, mit einem ersten Einleitungs-Druckwert, über die fünfte Ventileinrichtung zum Prüfen des Prüflings an den Prüfling leitbar ist, wobei der erste Einleitungs-Druckwert größer ist als ein zweiter Einleitungs-Druckwert, mit welchem das Fluid mittels der ersten Pumpvorrichtung maximal beaufschlagbar ist. Beispielsweise ist die zweite Pumpvorrichtung zum Beaufschlagen des Fluids mit dem ersten Einleitungs-Druckwert von sechstausend Kilo-Pascal ausgebildet sein, während die erste Pumpvorrichtung zum Beaufschlagen des Fluids mit einem zweiten Einleitungs-Druckwert von zwischen null und sechshundert Kilo-Pascal, also maximal mit einem zweiten Einleitungs-Druckwert von sechshundert Kilo-Pascal, ausgebildet ist.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Fig. 1: ein schematisches Blockschaltbild eines erfindungsgemäßen Systems gemäß einer ersten Ausführungsform der vorliegenden Erfindung sowie einer erfindungsgemäßen Vorrichtung gemäß einer zweiten Ausführungsform der vorliegenden Erfindung;
- Fig. 2: eine schematische Seitenansicht einer erfindungsgemäßen Vorrichtung gemäß einer dritten Ausführungsform der vorliegenden Erfindung;
- Fig. 3: eine schematische perspektivische Ansicht der Vorrichtung gemäß der dritten Ausführungsform der vorliegenden Erfindung; und
- Fig. 4: eine schematische Ansicht in Draufsicht auf die Vorrichtung gemäß der dritten Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen.

### Beschreibung der Ausführungsbeispiele

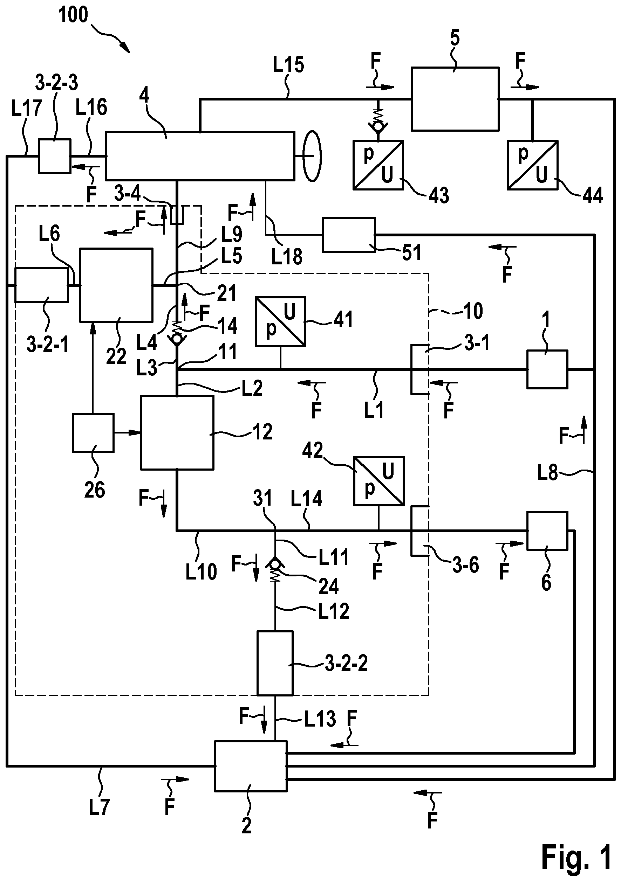

Fig. 1 zeigt ein schematisches Blockschaltbild eines Systems 100 zum automatischen Beaufschlagen eines gekühlten Fluids F mit einem ersten vorgebbaren Druckwert zur Ausgabe an einem Ausgangs-Anschluss 3-4, gemäß einer ersten Ausführungsform der vorliegenden Erfindung, sowie einer Vorrichtung 10 zum automatischen, gleichzeitigen Beaufschlagen eines Fluids F mit einem ersten vorgebbaren Druckwert zur Ausgabe an einem Ausgangs-Anschluss 3-4 und mit einem zweiten vorgebbaren Druckwert zur Ausgabe an einem Kühlvorrichtungs-Anschluss 3-6 gemäß einer zweiten Ausführungsform der vorliegenden Erfindung.

Das erfindungsgemäße System 100 weist gemäß der ersten Ausführungsform eine steuerbare erste Pumpvorrichtung 1 auf, welche zum Einleiten des Fluids F aus einem Fluidtank 2 an einem Einleitungs-Anschluss 3-1 einer erfindungsgemäßen Vorrichtung 10 gemäß der zweiten Ausführungsform der vorliegenden Erfindung anschließbar ist. Gemäß der ersten und zweiten Ausführungsform handelt es sich bei dem Fluid F um ein Öl. Die erste Pumpvorrichtung 1 ist als eine Zahnradpumpe ausgebildet, welche eine Leistung von 0,75 kW aufweist, wobei das Öl als Fluid F mit einem Einleitungs-Druckwert zwischen null und achthundert Kilo-Pascal bei einem Betrieb mit 50 Hertz mit einem Volumenstrom von 22,3 Liter pro Minute oder bei einem Betrieb mit 60 Hertz mit einem Volumenstrom von 26,8 Liter pro Minute an den Einleitungs-Anschluss 3-1 lieferbar ist.

Das in den Einleitungs-Anschluss 3-1 eingeleitete Öl als Fluid F ist über einen ersten Leitungsabschnitt L1 an einen ersten Leitungsknoten 11 leitbar, wobei zwischen dem Einleitungs-Anschluss 3-1 und dem ersten Leitungsknoten 11 kein Teil des Fluids F dauerhaft abgezweigt wird. Zwischen dem ersten Leitungsknoten 11 und dem Einleitungs-Anschluss 3-1 befindet sich ein erster Drucksensor 41, mittels welchem ein aktueller Druckwert des Fluids F zwischen den ersten Leitungsknoten 11 und dem Einleitungs-Anschluss 3-1 messbar ist. Mit anderen Worten ist mittels des Drucksensors 41 der Einleitungs-Druckwert der ersten Pumpvorrichtung 1 messbar.

Der erste Leitungsknoten 11 weist einen ersten Ausgang und einen zweiten Ausgang auf, an welche das von dem Einleitungs-Anschluss 3-1 an den ersten Leitungsknoten 11 geleitete Fluid leitbar ist. Mittels des ersten Ausgangs ist das Fluid F über einen zweiten Leitungsabschnitt L2 an eine steuerbare erste Ventileinrichtung mit einem einstellbaren ersten Öffnungsdruckwert leitbar. Die erste Ventileinrichtung 12 ist ein elektronisch steuerbares Proportionalventil, welches mittels einer Steuereinrichtung 26 des erfindungsgemäßen Systems 100 steuerbar ist. Die Steuervorrichtung 26 kann auch als Teil der erfindungsgemäßen Vorrichtung 10 ausgebildet sein. Die Steuervorrichtung 26 ist zum Vorgeben, vorzugsweise auch zum Anpassen, des ersten und des zweiten vorgebbaren Druckwerts ausgebildet.

Über die erste Ventileinrichtung 12 ist das Fluid F zumindest zu einem Teil an einen Kühlvorrichtungs-Anschluss 3-6 der Vorrichtung 10 leitbar. An den Kühlvorrichtungs-Anschluss 6 ist eine Kühlvorrichtung 6 des erfindungsgemäßen Systems 100 anschließbar, mittels welcher der Prüfling und/oder eine Einspritzmenge in den Prüfling kühlbar ist, wobei das zumindest zu einem Teil an den Kühlvorrichtungs-Anschluss 3-6 geleitete Fluid F als Kühlmittel fungiert.

Der zweite Ausgang des ersten Leitungsknotens 11 ist über einen dritten Leitungsabschnitt L3 mit einer zweiten Ventileinrichtung 14 verbunden, welche als Rückschlagventil mit einem zweiten Öffnungsdruckwert von 200 Kilo-Pascal ausgebildet ist. Die als Rückschlagventil ausgebildete zweite Ventileinrichtung 14 sorgt zum einen dafür, dass aufgrund eines relativ hohen Differenzdruckes an der als Proportionalventil ausgebildeten ersten Ventileinrichtung 12 ein genügend hoher Volumenstrom des Fluids in den Kühlkreislauf, das heißt in Richtung des Kühlvorrichtungs-Anschlusses 3-6, und durch den Kühlvorrichtungs-Anschluss 3-6 hindurch, fließen kann. Der druckseitige Ausgang der als Rückschlagventil ausgebildeten zweiten Ventileinrichtung 14 ist über einen vierten Leitungsabschnitt L4 an einen zweiten Leitungsknoten 21 angeschlossen.

Der zweite Leitungsknoten 21 weist einen dritten Ausgang und einen vierten Ausgang auf, an welche das an den zweiten Leitungsknoten 21 geleitete Fluid F leitbar ist. An den dritten Ausgang ist über einen fünften Leitungsabschnitt L5 eine steuerbare dritte Ventileinrichtung 22 mit einem einstellbaren dritten Öffnungsdruckwert angeschlossen. Die dritte Ventileinrichtung 22 ist als elektronisch steuerbares Proportionalventil ausgebildet und beispielsweise ebenfalls mittels der Steuervorrichtung 26 steuerbar. An der Ausgangsseite der dritten Ventileinrichtung 22 ist über einen sechsten Leitungsabschnitt L6 ein erster Rückführungs-Anschluss 3-2-1 ausgebildet, welcher mittels eines siebten Leitungsabschnitts L7 an einen Fluidtank 2 des erfindungsgemäßen Systems 100 angeschlossen ist. Der Fluidtank 2 ist zum Aufbewahren des Fluids sowie zum Bereitstellen des Fluids, über einen achten Leitungsabschnitt L8, zum Pumpen durch die erste Pumpvorrichtung 1 ausgebildet.

Der vierte Ausgang des zweiten Leitungsknotens 21 ist über einen neunten Leitungsabschnitt L9 an den Ausgangs-Anschluss 3-4 der erfindungsgemäßen Vorrichtung 10 angeschlossen.

An der Ausgangsseite der ersten Ventileinrichtung 12 ist über einen zehnten Leitungsabschnitt L10 ein dritter Leitungsknoten 31 angeschlossen, welcher einen fünften Ausgang und einen sechsten Ausgang aufweist. An dem fünften Ausgang ist über einen elften Leitungsabschnitt L11 eine vierte Ventileinrichtung 24 mit einem vierten Öffnungsdruckwert angeschlossen. Die vierte Ventileinrichtung 24 ist als Rückschlagventil mit einem vierten Öffnungsdruckwert von 35 Kilo-Pascal ausgebildet. Hierdurch ermöglicht die vierte Ventileinrichtung 24 das Beaufschlagen des Fluids F mit dem vorgebbaren und vorgegebenen zweiten Druckwert, beispielsweise zwanzig Kilo-Pascal, in dem Kühlkreislauf, das heißt insbesondere an dem Kühlvorrichtungs-Anschluss 3-6, was einen konstanten oder nahezu konstanten Volumenstrom, im vorliegenden Beispiel 9 Liter pro Minute, durch die Kühlvorrichtung 6 zur Folge hat. Über einen zwölften Leitungsabschnitt L12 ist die vierte Ventileinrichtung 24 an einen zweiten Rückführungs-Anschluss 3-2-2 angeschlossen, welcher wiederum über einen dreizehnten Leitungsabschnitt L13 an den Fluidtank 2 angeschlossen ist.

An dem sechsten Ausgang des dritten Leitungsknotens 31 ist über einen vierzehnten Leitungsabschnitt L14 ein zweiter Drucksensor 42 zum Messen eines zweiten aktuellen Druckwerts des Öls F zwischen dem dritten Leitungsknoten 31 und dem Kühlvorrichtungs-Anschluss 3-6 angeordnet. Mit anderen Worten wird, in Flussrichtung des Fluids F vor der zweiten Ventileinrichtung 14, über die als Proportionalventil ausgebildete erste Ventileinrichtung 12 zumindest ein Teil des Fluids F zum Versorgen der Kühlvorrichtung 6 abgezweigt, wobei sich, in Flussrichtung des Fluids nach der ersten Ventileinrichtung 12, die Leitungsführung in die Versorgung der Kühlvorrichtung 6 über den Kühlvorrichtungs-Anschluss 3-6 sowie über die als Rückschlagventil ausgebildete vierte Ventileinrichtung 24 zurück in den Fluidtank 2 verzweigt. Basierend auf dem zweiten Drucksensors 42 wird das Fluid an dem Kühlvorrichtungs-Anschluss 3-6 auf den vorgebbaren und vorgegebenen zweiten Druckwert geregelt.

Der Ausgangs-Anschluss 3-4 ist an eine manuell betätigbare fünfte Ventileinrichtung 4 des erfindungsgemäßen Systems 100 mit einem manuell einstellbaren fünften Öffnungsdruckwert angeschlossen. Die fünfte Ventileinrichtung 4 fungiert als 600 Kilo-Pascal-Überdruckventil. An einer Ausgangsseite der fünften Ventileinrichtung 4 ist ein Prüfling 5, insbesondere eine Einspritzpumpe, beispielsweise eine Hochdruckpumpe, zum Prüfen des Prüflings 5 mit dem vorgebbaren und vorgegebenen ersten Druckwert angeschlossen. Zwischen der fünften Ventileinrichtung 4 und dem Prüfling 5 ist ein dritter Drucksensor 43 zum Messen eines dritten aktuellen Druckwerts an einem fünfzehnten Leitungsabschnitt L15 angeordnet, welches die fünfte Ventileinrichtung 4 an den Prüfling 5 anschließt. Zum Prüfen des Prüflings 5 ist weiterhin ein vierter Drucksensor 44 zum Messen eines vierten aktuellen Druckwerts des Fluids F in Flussrichtung des Fluids F hinter dem Prüfling 5 angeordnet.

An die fünfte Ventileinrichtung 4 ist eine zweite Pumpvorrichtung 51 des Systems 100 angeschlossen, mittels welcher aus dem Fluidtank 2 das Fluid F an die fünfte Ventileinrichtung 4 leitbar ist. Die zweite Pumpvorrichtung 51 ist als eine Zahnradpumpe ausgebildet, welche eine Leistung von 0,75 Kilo-Watt aufweist, wobei das Öl als Fluid F mit dem Einleitungs-Druckwert von sechstausend Kilo-Pascal bei einem Betrieb mit 50 Hertz mit einem Volumenstrom von 1,4 Liter pro Minute oder bei einem Betrieb mit 60 Hertz mit einem Volumenstrom von 1,7 Liter pro Minute an die fünfte Ventileinrichtung 4 lieferbar ist.

Die fünfte Ventileinrichtung 4 ist derart ausgebildet, dass in einer ersten Ventilstellung der fünften Ventileinrichtung 4 das von der ersten Pumpvorrichtung 1 in die Vorrichtung 10 eingeleitete Fluid F nicht an den Prüfling, sondern über einen dritten Rückführungs-Anschluss 3-2-3, welchen die fünfte Ventileinrichtung 4 aufweist, an den Fluidtank 2 rückführbar ist. In der ersten Ventilstellung ist weiterhin das von der zweiten Pumpvorrichtung 51 an die fünfte Ventileinrichtung 4 geleitete Fluid mit dem Einleitungs-Druckwert von sechstausend Kilo-Pascal an den Prüfling 4 leitbar. In einer zweiten Ventilstellung der fünften Ventileinrichtung 4 ist das Fluid F sowohl mittels der ersten Pumpvorrichtung 1 als auch mittels der zweiten Pumpvorrichtung 51 dem Prüfling 5 bereitstellbar.

Zum Erreichen eines vergleichsweise hohen vorgegebenen ersten Druckwerts an dem Ausgangs-Anschluss 3-4 kann die dritte Ventileinrichtung 22, beispielsweise gesteuert durch die Steuereinrichtung 26, vollständig geschlossen werden. Durch ein geregeltes Schließen der ersten Ventileinrichtung 12 kann somit das Fluid F an dem Ausgangs-Anschluss 3-4 mit dem vorgegebene erste Druckwert beaufschlagt werden. Die erste Ventileinrichtung 12 kann dazu so weit geschlossen werden, bis der zweite Drucksensor 42 ein Unterschreiten des zweiten vorgebbaren und vorgegebenen Druckwerts, welcher größer oder gleich dem für ein Verwenden des Fluids F als Kühlmittel in der Kühlvorrichtung 6 nötigen Mindestdruckwerts ist, und/oder ein Unterschreiten eines Mindestdurchflusses erkennt. Der Mindestdruckwert beträgt im vorliegenden Beispiel 20 Kilo-Pascal.

Bei einem verhältnismäßig niedrigen vorgegebenen ersten Druckwert und keiner oder sehr geringer Abnahme von Fluid F durch den Prüfling 5 kann eine Leckage an der als Rückschlagventil ausgebildeten zweiten Ventileinrichtung 14 über die dritte Ventileinrichtung 22 an den Fluidtank 2 rückgeführt werden. Gleichermaßen kann ein etwaiger Volumenstrom, welcher der fünften Ventileinrichtung 4 mittels der zweiten Pumpvorrichtung 51 zugetragen wird, über die dritte Ventileinrichtung 22 ganz oder teilweise an den Fluidtank 2 leitbar und somit rückführbar sein. Somit ist im vorliegenden Beispiel das Fluid F an dem Ausgangs-Anschluss 3-4 mit dem vorgegebenen ersten Druckwert, mit Druckwerten zwischen 10 und 600 Kilo-Pascal, durch Ansteuern der ersten Ventileinrichtung 12 und der dritten Ventileinrichtung 22, insbesondere basierend auf den gemessenen aktuellen ersten bis dritten Druckwerten, automatisch beaufschlagbar.

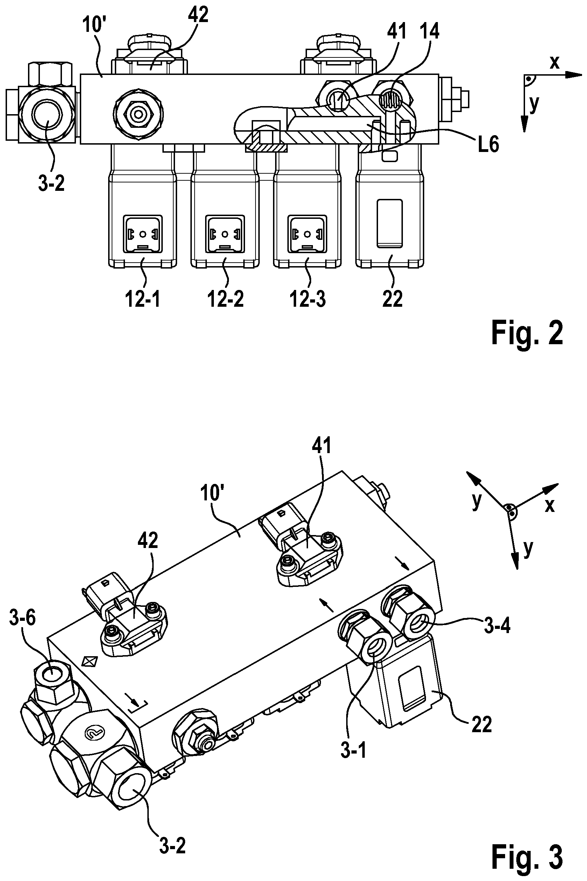

Fig. 2 zeigt eine schematische Seitenansicht einer Vorrichtung 10' zum automatischen, gleichzeitigen Beaufschlagen eines Fluids mit einem ersten vorgebbaren Druckwert zur Ausgabe an einem Ausgangs-Anschluss und mit einem zweiten vorgebbaren Druckwert zur Ausgabe an einem Kühlvorrichtungs-Anschluss gemäß einer dritten Ausführungsform der vorliegenden Erfindung. Zum besseren Verständnis der Figuren 2 bis 4 ist ein orthonormales Koordinatensystem mit Koordinatenachsen x, y und z definiert, wobei die Seitenansicht gemäß Fig. 2 in der x-y-Ebene liegt.

Die Vorrichtung 10' ist eine Variante der Vorrichtung 10, welche sich von dieser darin unterscheidet, dass die erste Ventileinrichtung 12-1, 12-2, 12-3 der Vorrichtung 10' als drei getrennt ausgebildete, separat steuerbare Proportionalventile 12-1, 12-2, 12-3 ausgebildet ist, und dass der erste Rückführungs-Anschluss 3-2-1 und der zweite Rückführungs-Anschluss 3-2-3 als ein und derselbe, gemeinsame Rückführungs-Anschluss 3-2 ausgebildet sind.

Die Vorrichtung 10' ist derart ausgebildet, dass bei ordnungsgemäßer Montage die als Proportionalventile ausgebildeten ersten und dritten Ventileinrichtungen 12-1, 12-2, 12-3, 22 von der Vorrichtung 10' aus in Wirkungsrichtung der Erd-Schwerkraft angeordnet sind. Hierdurch können Lufteinschlüsse in den Proportionalventilen vermieden werden, welche zu Resonanzschwingungen der Proportionalventile führen können.

Fig. 3 zeigt eine schematische perspektivische Ansicht der Vorrichtung 10' gemäß der dritten Ausführungsform der vorliegenden Erfindung.

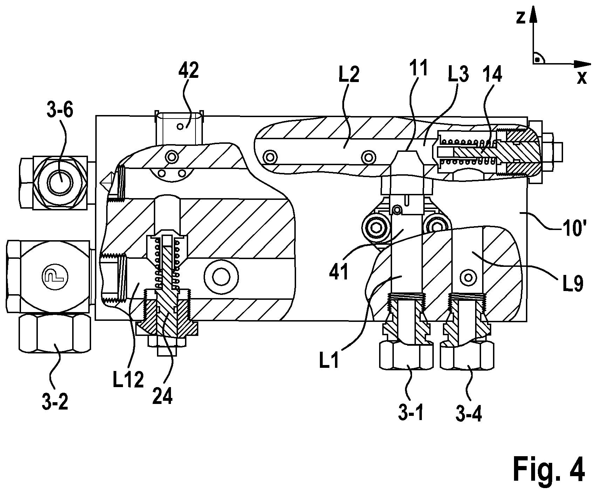

Fig. 4 zeigt eine schematische Ansicht in Draufsicht auf die Vorrichtung 10' gemäß der dritten Ausführungsform der vorliegenden Erfindung. Die Draufsicht gemäß Fig. 2 liegt in der x-z-Ebene.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann auch die zweite und/oder die vierte Ventileinrichtung 14, 24 mit einer manuellen oder automatischen Einstellbarkeit des zweiten Öffnungsdruckwerts ausgebildet sein. Die Steuereinrichtung 26 kann zum automatischen Einstellen des zweiten Öffnungsdruckwerts basierend auf einer Druckdifferenz zwischen einem mittels des dritten und/oder vierten Drucksensor 43, 44 gemessenen aktuellen Druckwerts und einem mittels des ersten Drucksensors 41 gemessenen aktuellen Druckwerts ausgebildet sein. Es kann vorteilhaft sein, wenn der Öffnungsdruckwert der zweiten Ventileinrichtung 14 größer eingestellt ist als der vorgegebene zweite Druckwert.

## Patentansprüche

1. Vorrichtung zur Druckbeaufschlagung eines Fluids,
wobei das Fluid (F) mit einem ersten vorgebbaren Druckwert zur Ausgabe an einem Ausgangs-Anschluss (3-4) und mit einem zweiten vorgebbaren Druckwert zur Ausgabe an einem Kühlvorrichtungs-Anschluss (3-6) beaufschlagbar ist, **dadurch gekennzeichnet, dass** die Vorrichtung ausgestattet ist mit:
einem Einleitungs-Anschluss (3-1) zum Einleiten des Fluids (F) in die Vorrichtung (10);
dem Kühlvorrichtungs-Anschluss (3-6) und dem Ausgangs-Anschluss (3-4);
einem ersten Leitungsknoten (11), welcher einen ersten Ausgang und einen zweiten Ausgang aufweist, wobei das an dem Einleitungs-Anschluss (3-1) eingeleitete Fluid (F) mittels des ersten Ausgangs an eine steuerbare erste Ventileinrichtung (12; 12-1, 12-2, 12-3) mit einem einstellbaren ersten Öffnungsdruckwert leitbar ist; und mittels des zweiten Ausgangs an eine zweite Ventileinrichtung (22) mit einem zweiten Öffnungsdruckwert leitbar ist;
wobei über die steuerbare ersten Ventileinrichtung (12; 12-1, 12-2, 12-3) das Fluid (F) zu dem Kühlvorrichtungs-Anschluss (3-6) leitbar ist;
wobei über die zweite Ventileinrichtung (22) das Fluid (F) zu einem zweiten Leitungsknoten (21) mit einem dritten Ausgang und einem vierten Ausgang leitbar ist;
wobei das zu dem zweiten Leitungsknoten (21) geleitete Fluid (F) mittels des dritten Ausgangs des zweiten Leitungsknotens (21) zu einer steuerbaren dritten Ventileinrichtung (22) mit einem einstellbaren dritten Öffnungsdruckwert leitbar ist; und wobei das zu dem zweiten Leitungsknoten (21) geleitete Fluid (F) mittels des vierten Ausgangs des zweiten Leitungsknotens (21) zu dem Ausgangs-Anschluss (3-4) leitbar ist; und
wobei die erste Ventileinrichtung (12; 12-1, 12-2, 12-3) und die dritte Ventileinrichtung (22) automatisch zum gleichzeitigen Beaufschlagen des Fluids (F) mit dem ersten vorgebbaren Druckwert zur Ausgabe an dem Ausgangs-Anschluss (3-4) und mit dem zweiten vorgebbaren Druckwert zur Ausgabe an dem Kühlvorrichtungs-Anschluss (3-2) steuerbar sind.

2. Vorrichtung nach Anspruch 1, wobei die erste Ventileinrichtung (12; 12-1, 12-2, 12-3) und/oder die dritte Ventileinrichtung (22) als mindestens ein elektronisch oder pneumatisch steuerbares Proportionalventil ausgebildet ist.

3. Vorrichtung nach einem der vorangehenden Ansprüche 1 oder 2, wobei die zweite Ventileinrichtung (14) als Rückschlagventil ausgebildet ist.

4. Vorrichtung nach einem der vorangehenden Ansprüche 1 bis 3, wobei das an die steuerbare dritte Ventileinrichtung (22) geleitete Fluid (F) an einen ersten Rückführungsanschluss (3-2-1) leitbar ist, welcher zum Anschließen eines Fluidtanks (2) zum Rückführen des an die steuerbare dritte Ventileinrichtung (22) geleiteten Fluids (F) an den Fluidtank (2) ausgebildet ist.

5. Vorrichtung nach einem der vorangehenden Ansprüche 1 bis 4, mit einem dritten Leitungsknoten (31), an welchen das über die steuerbare erste Ventileinrichtung (12; 12-1, 12-2, 12-3) geleitete Fluid leitbar ist und welcher einen fünften Ausgang und einen sechsten Ausgang aufweist; wobei das zu dem dritten Leitungsknoten (31) geleitete Fluid mittels des fünften Ausgangs an eine vierte Ventileinrichtung (24) mit einem vierten Öffnungsdruckwert leitbar ist; über welche das Fluid (F) an einen zweiten Rückführungsanschluss (3-2-2) leitbar ist; welcher zum Anschließen eines Fluidtanks (2) zum Rückführen des an die vierte Ventileinrichtung (22) geleiteten Fluids in den Fluidtank (2) ausgebildet ist; und wobei das an den dritten Leitungsknoten (31) geleitete Fluid mittels des sechsten Ausgangs an den Kühlvorrichtungs-Anschluss (3-6) leitbar ist.

6. Vorrichtung nach einem der vorangehenden Ansprüche 1 bis 5, mit einem ersten Drucksensor (41), welcher zum Messen eines ersten aktuellen Druckwerts des Fluids (F) zwischen dem Einleitungs-Anschluss (3-1) und dem ersten Leitungsknoten (11) ausgebildet ist.

7. Vorrichtung nach einem der vorangehenden Ansprüche 1 bis 6, mit einem zweiten Drucksensor (42), welcher zum Messen eines zweiten aktuellen Druckwerts des Fluids (F) zwischen dem dritten Leitungsknoten (31) und dem Kühlvorrichtungs-Anschluss (3-6) ausgebildet ist.

8. System zur Druckbeaufschlagung eines Fluids,
wobei das Fluid (F) mit einem ersten vorgebbaren Druckwert zur Ausgabe an einem Ausgangs-Anschluss (3-4) beaufschlagbar ist, mit:
einer Vorrichtung (10; 10') gemäß einem der Ansprüche 1 bis 7;
einer steuerbaren ersten Pumpvorrichtung (1), welche zum Einleiten des Fluids (F) an den Einleitungs-Anschluss (3-6) der Vorrichtung (10) angeschlossen ist;
einem Fluidtank (2) zum Aufbewahren des Fluids (F), welcher zum Aufnehmen des von der Vorrichtung (10; 10') an den Fluidtank (2) rückzuführenden Fluids (F) an die Vorrichtung (10; 10') angeschlossen ist; und
einer an dem Kühlvorrichtungs-Anschluss (3-6) der Vorrichtung (10; 10') angeschlossenen Kühlvorrichtung (6), in welcher das Fluid (F) als Kühlmittel fungiert und mittels welcher das Fluid (F) an den Fluidtank (2) rückführbar ist.

9. System nach Anspruch 8, mit:
einer fünften Ventileinrichtung (4) mit einem manuell einstellbaren fünften Öffnungsdruckwert, welche an den Ausgangs-Anschluss (3-4) der Vorrichtung (10) angeschlossen ist; und über welche das mit dem vorgegebenen ersten Druckwert beaufschlagte Fluid (F) zum Prüfen eines Prüfling (5) an den Prüfling (5) leitbar ist.

10. System nach Anspruch 9 mit:
einer zweiten Pumpvorrichtung (51), mittels welcher das Fluid, mit einem ersten Einleitungs-Druckwert, über die fünfte Ventileinrichtung (4) zum Prüfen des Prüflings an den Prüfling leitbar ist, wobei der erste Einleitungs-Druckwert größer ist als ein zweiter Einleitungs-Druckwert, mit welchem das Fluid (F) mittels der ersten Pumpvorrichtung (1) maximal beaufschlagbar ist.

11. Verwendung des Systems nach einem der vorangehenden Ansprüche 8 bis 10 zum Prüfen einer Einspritzpumpe (5).

## Claims

1. Device for applying pressure to a fluid,
wherein the fluid (F)is able to be acted on with a first predefinable pressure value for discharge at an outlet port (3-4) and is able to be acted on with a second predefinable pressure value for discharge at a cooling device port (3-6), **characterized in that** the device is equipped with:
an introduction port (3-1) for introducing the fluid (F) into the device (10);
the cooling device port (3-6) and the outlet port (3-4) ;
a first line junction (11) which has a first outlet and a second outlet, wherein the fluid (F) introduced at the introduction port (3-1) is able to be guided by means of the first outlet to a controllable first valve device (12; 12-1, 12-2, 12-3) with a settable first opening pressure value, and is able to be guided by means of the second outlet to a second valve device (22) with a second opening pressure value;
wherein the fluid (F) is able to be guided via the controllable first valve device (12; 12-1, 12-2, 12-3) to the cooling device port (3-6);
wherein the fluid (F) is able to be guided via the second valve device (22) to a second line junction (21) having a third outlet and a fourth outlet;
wherein the fluid (F) guided to the second line junction (21) is able to be guided by means of the third outlet of the second line junction (21) to a controllable third valve device (22) with a settable third opening pressure value, and wherein the fluid (F) guided to the second line junction (21) is able to be guided by means of the fourth outlet of the second line junction (21) to the outlet port (3-4); and
wherein the first valve device (12; 12-1, 12-2, 12-3) and the third valve device (22) are able to be automatically controlled for the simultaneous action on the fluid (F) with the first predefinable pressure value for discharge at the outlet port (3-4) and with the second predefinable pressure value for discharge at the cooling device port (3-2).

2. Device according to Claim 1, wherein the first valve device (12; 12-1, 12-2, 12-3) and/or the third valve device (22) is designed as at least one electronically or pneumatically controllable proportional valve.

3. Device according to either of the preceding Claims 1 and 2, wherein the second valve device (14) is designed as a check valve.

4. Device according to one of the preceding Claims 1 to 3, wherein the fluid (F) guided to the controllable third valve device (22) is able to be guided to a first return port (3-2-1) which is designed for the connection of a fluid tank (2) for returning the fluid (F) guided to the controllable third valve device (22) to the fluid tank (2) .

5. Device according to one of the preceding Claims 1 to 4, having a third line junction (31) to which the fluid guided via the controllable first valve device (12; 12-1, 12-2, 12-3) is able to be guided and which has a fifth outlet and a sixth outlet, wherein the fluid guided to the third line junction (31) is able to be guided by means of the fifth outlet to a fourth valve device (24) with a fourth opening pressure value, via which fourth valve device the fluid (F) is able to be guided to a second return port (3-2-2) which is designed for the connection of a fluid tank (2) for returning the fluid guided to the fourth valve device (22) to the fluid tank (2), and wherein the fluid guided to the third line junction (31) is able to be guided by means of the sixth outlet to the cooling device port (3-6).

6. Device according to one of the preceding Claims 1 to 5, having a first pressure sensor (41) which is designed for measuring a first current pressure value of the fluid (F) between the introduction port (3-1) and the first line junction (11).

7. Device according to one of the preceding Claims 1 to 6, having a second pressure sensor (42) which is designed for measuring a second current pressure value of the fluid (F) between the third line junction (31) and the cooling device port (3-6) .

8. System for applying pressure to a fluid,
wherein the fluid (F) is able to be acted on with a first predefinable pressure value for discharge at an outlet port (3-4), said system having:
a device (10; 10') according to one of Claims 1 to 7;
a controllable first pump device (1) which, for the purpose of introducing the fluid (F), is connected to the introduction port (3-6) of the device (10);
a fluid tank (2) for storing the fluid (F), which, for the purpose of receiving the fluid (F) to be returned to the fluid tank (2) from the device (10, 10'), is connected to the device (10, 10'); and
a cooling device (6) which is connected to the cooling device port (3-6) of the device (10, 10') and in which the fluid (F) functions as a cooling medium and by means of which the fluid (F) is able to be returned to the fluid tank (2).

9. System according to Claim 8, having:
a fifth valve device (4) which has a manually settable fifth opening pressure value and which is connected to the outlet port (3-4) of the device (10) and via which, for the purpose of testing a test object (5), the fluid (F) acted on with the predefined first pressure value is able to be guided to the test object (5).

10. System according to Claim 9, having:
a second pump device (51), by means of which, for the purpose of testing the test object, the fluid is able to be guided with a first introduction pressure value via the fifth valve device (4) to the test object, wherein the first introduction pressure value is greater than a second introduction pressure value with which the fluid (F) is able to be acted on to the maximum extent by means of the first pump device (1).

11. Use of the system according to one of the preceding Claims 8 to 10, for testing an injection pump (5).

## Revendications

1. Dispositif pour solliciter en pression un fluide, le fluide (F) pouvant être sollicité avec une première valeur de pression prédéfinissable de manière à être délivré au niveau d'un raccord de sortie (3-4) et avec une deuxième valeur de pression prédéfinissable de manière à être délivré à un raccord de dispositif de refroidissement (3-6), **caractérisé en ce que** le dispositif comprend :
un raccord d'introduction (3-1) pour introduire le fluide (F) dans le dispositif (10) ;
le raccord de dispositif de refroidissement (3-6) et le raccord de sortie (3-4) ;
un premier noeud de conduite (11) qui présente une première sortie et une deuxième sortie, le fluide (F) introduit au niveau du raccord d'introduction (3-1) pouvant être conduit au moyen de la première sortie à un premier dispositif de soupape commandable (12 ; 12-1, 12-2, 12-3) avec une première valeur de pression d'ouverture ajustable ; et pouvant être conduit au moyen de la deuxième sortie à un deuxième dispositif de soupape (22) avec une deuxième valeur de pression d'ouverture ;
le fluide (F) pouvant être conduit au raccord de dispositif de refroidissement (3-6) par le biais du premier dispositif de soupape commandable (12 ; 12-1, 12-2, 12-3) ;
le fluide (F) pouvant être conduit à un deuxième noeud de conduite (21) avec une troisième sortie et une quatrième sortie par le biais du deuxième dispositif de soupape (22) ;
le fluide (F) conduit au deuxième noeud de conduite (21) pouvant être conduit au moyen de la troisième sortie du deuxième noeud de conduite (21) à un troisième dispositif de soupape commandable (22) avec une troisième valeur de pression d'ouverture ajustable ; et le fluide (F) conduit au deuxième noeud de conduite (21) pouvant être conduit au moyen de la quatrième sortie du deuxième noeud de conduite (21) au raccord de sortie (3-4) ; et
le premier dispositif de soupape (12 ; 12-1, 12-2, 12-3) et le troisième dispositif de soupape (22) pouvant être commandés automatiquement pour solliciter simultanément le fluide (F) avec la première valeur de pression prédéfinissable de manière à le délivrer au raccord de sortie (3-4) et avec la deuxième valeur de pression prédéfinissable de manière à le délivrer au raccord de dispositif de refroidissement (3-2).

2. Dispositif selon la revendication 1, dans lequel le premier dispositif de soupape (12 ; 12-1, 12-2, 12-3) et/ou le troisième dispositif de soupape (22) sont réalisés sous forme d'au moins une soupape proportionnelle pouvant être commandée par voie électronique ou pneumatique.

3. Dispositif selon l'une quelconque des revendications précédentes 1 ou 2, dans lequel le deuxième dispositif de soupape (14) est réalisé sous forme de clapet antiretour.

4. Dispositif selon l'une quelconque des revendications précédentes 1 à 3, dans lequel le fluide (F) conduit au troisième dispositif de soupape commandable (22) peut être conduit à un premier raccord de retour (3-2-1), qui est réalisé de manière à raccorder un réservoir de fluide (2) pour le retour au réservoir de fluide (2) du fluide (F) conduit au troisième dispositif de soupape commandable (22).

5. Dispositif selon l'une quelconque des revendications précédentes 1 à 4, comprenant un troisième noeud de conduite (31), auquel peut être conduit le fluide conduit par le biais du premier dispositif de soupape commandable (12 ; 12-1, 12-2, 12-3) et qui présente une cinquième sortie et une sixième sortie ; le fluide conduit au troisième noeud de conduite (31) pouvant être conduit au moyen de la cinquième sortie à un quatrième dispositif de soupape (24) avec une quatrième valeur de pression d'ouverture ; par le biais duquel le fluide (F) peut être conduit à un deuxième raccord de retour (3-2-2) ; qui est réalisé de manière à raccorder un réservoir de fluide (2) pour le retour du fluide conduit au quatrième dispositif de soupape (22) dans le réservoir de fluide (2) ; et
le fluide conduit au troisième noeud de conduite (31) pouvant être conduit au moyen de la sixième sortie au raccord de dispositif de refroidissement (3-6).

6. Dispositif selon l'une quelconque des revendications précédentes 1 à 5, comprenant un premier capteur de pression (41) qui est réalisé de manière à mesurer une première valeur de pression actuelle du fluide (F) entre le raccord d'introduction (3-1) et le premier noeud de conduite (11).

7. Dispositif selon l'une quelconque des revendications précédentes 1 à 6, comprenant un deuxième capteur de pression (42) qui est réalisé de manière à mesurer une deuxième valeur de pression actuelle du fluide (F) entre le troisième noeud de conduite (31) et le raccord de dispositif de refroidissement (3-6).

8. Système de sollicitation en pression d'un fluide, le fluide (F) pouvant être sollicité avec une première valeur de pression prédéfinissable de manière à être délivré à un raccord de sortie (3-4), comprenant :
un dispositif (10 ; 10') selon l'une quelconque des revendications 1 à 7 ;
un premier dispositif de pompe commandable (1) qui est raccordé, pour introduire le fluide (F), au raccord d'introduction (3-6) du dispositif (10) ;
un réservoir de fluide (2) pour stocker le fluide (F), lequel est raccordé au dispositif (10 ; 10') pour recevoir le fluide (F) retournant du dispositif (10 ; 10') au réservoir de fluide (2) ; et
un dispositif de refroidissement (6) raccordé au raccord de dispositif de refroidissement (3-6) du dispositif (10 ; 10'), dans lequel le fluide (F) sert de réfrigérant et au moyen duquel le fluide (F) peut être ramené au réservoir de fluide (2).

9. Système selon la revendication 8, comprenant :
un cinquième dispositif de soupape (4) avec une cinquième valeur de pression d'ouverture ajustable manuellement, qui est raccordé au raccord de sortie (3-4) du dispositif (10) ; et par le biais duquel le fluide (F) sollicité avec la première valeur de pression prédéfinie peut être conduit à l'échantillon (5) pour contrôler un échantillon (5) .

10. Système selon la revendication 9, comprenant :
un deuxième dispositif de pompe (51) au moyen duquel le fluide, avec une première valeur de pression d'introduction, peut être conduit à l'échantillon par le biais du cinquième dispositif de soupape (4) pour contrôler l'échantillon, la première valeur de pression d'introduction étant supérieure à une deuxième valeur de pression d'introduction avec laquelle le fluide (F) peut être sollicité au maximum au moyen du premier dispositif de pompe (1).

11. Utilisation du système selon l'une quelconque des revendications précédentes 8 à 10 pour contrôler une pompe d'injection (5).
